(19) **Europäisches Patentamt / European Patent Office / Office européen des brevets**

(11) **EP 1 434 367 B1**

(12) **EUROPEAN PATENT SPECIFICATION**

(45) Date of publication and mention
of the grant of the patent:
**12.03.2008 Bulletin 2008/11**

(51) Int Cl.:
**H04B 7/08** (2006.01)    **H04L 27/26** (2006.01)

(21) Application number: **03029674.3**

(22) Date of filing: **23.12.2003**

(54) **An adaptive array antenna controller**

Vorrichtung zum adaptiven Steuern einer Gruppenantenne

Dispositif pour la commande adaptative d'un réseau d'antennes

(84) Designated Contracting States:
**DE FR GB**

(30) Priority: **27.12.2002 JP 2002380639**

(43) Date of publication of application:
**30.06.2004 Bulletin 2004/27**

(73) Proprietor: **FUJITSU LIMITED**
**Kawasaki-shi,**
**Kanagawa 211-8588 (JP)**

(72) Inventors:
• **Nakaya, Yuuta**
**Kawasaki-shi**
**Kanagawa 211-8588 (JP)**

• **Toda, Takeshi**
**Kawasaki-shi**
**Kanagawa 211-8588 (JP)**

(74) Representative: **HOFFMANN EITLE**
**Patent- und Rechtsanwälte**
**Arabellastrasse 4**
**81925 München (DE)**

(56) References cited:
**EP-A- 1 021 019**      **US-A- 5 307 376**
**US-A- 6 035 000**      **US-B1- 6 327 314**

EP 1 434 367 B1

**Description**

**BACKGROUND OF THE INVENTION**

1. Field of the Invention

The present invention relates to an adaptive array antenna controller.

2. Description of the Related Art

Transmission signals in mobile communication system are transmitted in a multipath transmission environment. In order to demodulate received signals well, it is necessary to appropriately process a variety of signals coming through several transmission paths. With respect to this point, the OFDM (Orthogonal Frequency Division Multiplexing) method is a promising technology in this technical field. In this method, data are carried on a plurality of carriers that have orthogonal relations with each other, and received signals are Fourier transformed and demodulated to provide a fading-proof communication system. This method has a certain length of guard interval at each symbol, and therefore delay signals can be limited within the guard intervals ideally and do not disturb the orthogonality.

However, some delay signals may exceed the guard intervals. In a mobile communication environment, frequency variation due to Doppler shift may cause interference components to mingle with received signals. Further, in a case where multiple communication systems exist, interference signals from other communication systems mingle with received signals. For example, in a radio LAN system using 2.4 GHz bandwidth, signals from Bluetooth systems or amateur radio stations are mixed as interference. Interference components mixed with received signals disturb the orthogonality between sub channels, and prevent the recovery of transmitted signals. Accordingly, it is necessary to suppress such interference signals by using adaptive equalizing techniques or adaptive array antenna techniques.

Conventional technologies for suppressing interference components are described in "OFDM Adaptive Array for suppressing Doppler Shift", Nishikawa, Yoshitaha Hara, Shinsuke Hara, The Institute of Electronics, Information and Communication Engineering, Technical Report A-P2000-90, October 2000; "Equalizer Training Algorithms for Multicarrier modulation Systems" J. S. Chow, J. M. Cioffi, and J. A. C. Bingham, International Conference on Communications, pp. 761-765, 1993; and "Asymmetric Digital Subscriber Line", ITU-T Recommendation G. 992.1, 1999.

In these conventional technologies, each received and weighted signal from each of a plurality of antenna elements is converted into a digital signal, and each thus obtained digital signal is supplied to a digital processing part to adaptively adjust weighting coefficients to suppress an interference component. In this method, plural digital signals each obtained from one of the adaptive array antenna elements are utilized and very accurate adaptive controlling is attained.

However, the conventional method needs to form a plurality of digital received signals based on the plurality of antenna elements. Therefore, a number of analog-to-digital converters corresponding to antenna elements are needed, the circuit is complex, and there are additional disadvantages regarding consumption of power, circuit size and cost, which are much more disadvantageous especially for small radios or mobile phones.

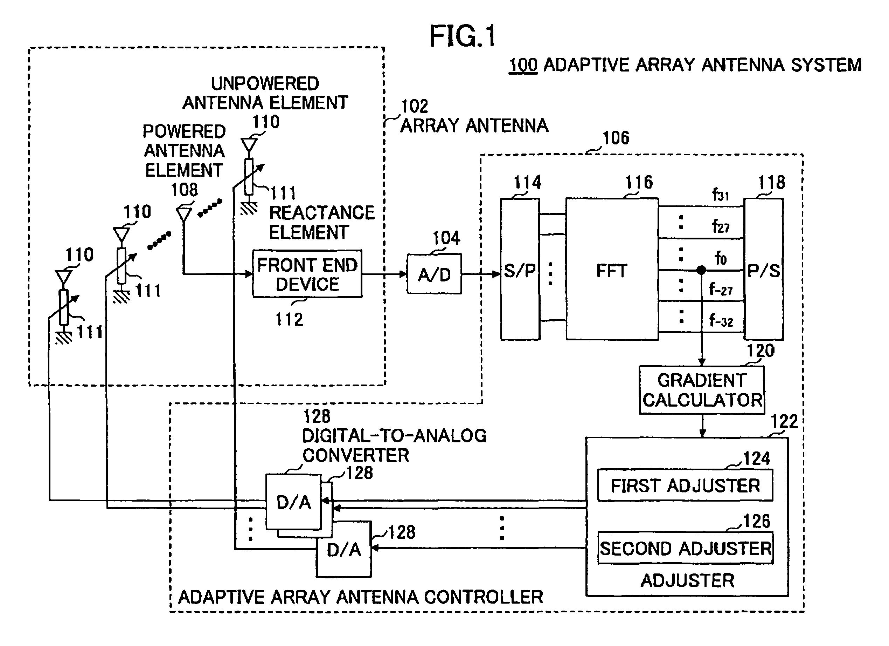

US-B-6 327 314 B1 is directed to a method and apparatus for providing channel estimation for multicarrier systems. A channel estimator 170 is shown in Fig. 1 as part of a receiver 160. In Fig. 1, receiver antennas (corresponding to a channel)(not shown) provide respective receiver signals to corresponding FFT modules, e.g. 1621. A reference generator 175 determines a reference signal based on inputs from the FFTs, as well as a summing device 166, a demodulator 167, and a decoder 168, and provides the reference signal to the channel estimator 170. The channel estimator 170 modifies the receiver inputs in accordance with an estimate of characteristics of the plurality of channels. As set forth most concisely in claim 5, the estimate of channel characteristics is generated based on the sub-steps of: generating a temporal estimate of channel characteristics based on the plurality of receiver inputs and the reference signal, transforming in the frequency domain the temporal estimation of channel characteristics, time-filtering the transformed temporal estimation, and transforming in the frequency domain the output of the step of time-filtering.

**SUMMARY OF THE INVENTION**

In view of above, it is a general object of the present invention to provide an adaptive array antenna controller for suppressing interference components contained in received signals.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by the adaptive array antenna controller particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides an adaptive array antenna controller that adaptively controls weighting coefficients of a plurality of antenna elements of an array antenna based on a digital signal outputted from an analog-to-digital converter receiving a weighted analog received signal from the array antenna, comprising: an extractor for extracting a signal component for each of a plurality of sub-carriers contained in the analog received signal by Fourier transforming the digital signal; and an adaptive controller for adjusting the weighting coefficients so as to suppress a predetermined sub-carrier among the sub-carriers.

## BRIEF DESCRIPTION OF THE DRAWINGS

   Fig.1 shows a block diagram of an adaptive array antenna system according to an embodiment of the present invention;
   Fig.2 shows the sub-carrier arrangement used by OFDM signal;
   Fig.3 shows a flowchart illustrating a controlling process according to the embodiment of the present invention;
   Fig.4 is shows an OFDM signal structure used in the embodiment of the present invention;
   Fig.5 shows a block diagram of an adaptive array antenna system according to another embodiment of the present invention;
   Fig.6 shows a block diagram of an adaptive array antenna system according to a further embodiment of the present invention; and
   Fig.7 shows a block diagram of another array antenna.

## DESCRIPTION OF THE PREFERRED EMBODIMENTS

In the following, embodiments of the present invention are described with reference to the accompanying drawings.

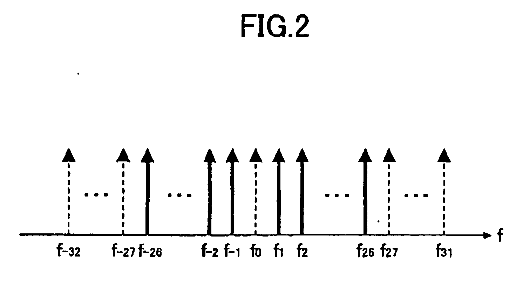

Fig. 1 uses reference numerals beginning with 1, Fig. 2 uses reference numerals beginning with 2, and so on.

Fig. 1 shows an adaptive array antenna system 100 according to an embodiment of the present invention. In general the adaptive array antenna system 100 comprises an array antenna 102, and an analog-to-digital converter 104 coupled to an output of the array antenna 102, an adaptive array antenna controller 106 coupled to an output of the analog-to- digital converter 104. The array antenna 102 according to the embodiment comprises one powered antenna element 108 and a plurality of unpowered antenna elements 110. The powered antennal element 108 is coupled to a front end device 112 that performs band-pass limitation and frequency conversion and others. An output of the front end device 112 forms an output of the array antenna 102 and is connected to the analog-to-digital converter 104. A signal received at the powered antenna element 108 is the one that transmits data using a plurality of sub-carriers, like OFDM signals. Each of the unpowered antenna elements 110 is connected to the earth potential via a reactance element controlled by the adaptive array antenna controller 106. The powered antenna elements 108 and the unpowered antenna elements 110 electromagnetically interact with each other and form a spatial combination type of array antenna that depends on spatial relations among the antenna elements and impedances of the reactance elements 111.

The adaptive array antenna controller 106 is coupled to an output of the analog-to-digital converter 104, and has a serial-parallel converter 114 for converting serial digital signal series into parallel signal series. Each output of the serial-parallel converter 114 is coupled to a Fast Fourier transformer 116 in which an input signal is Fast Fourier transformed to extract the signal component carried with each sub-carrier. The signal components (sub-carrier components) extracted at each sub-carrier are converted into a serial signal series by a parallel-serial converter 118 to recover transmitted signals by successive processes (not shown).

As shown in Fig. 2, multiple sub-carriers used in OFDM (Orthogonal Frequency Division Multiplexing) communication system are arranged. The basic idea of OFDM is to transmit blocks of symbols in parallel by employing a large number of orthogonal sub-carriers. With block transmission, N serial source symbols each with period $T_s$ are converted into a block of N parallel modulated symbols each with period $T = N T_s$. The multiple sub-carriers have constant frequency intervals or frequency separations and are arranged on the frequency axis with orthogonal relations to each other. In other words, the frequency separation of the sub-carriers, 1/T, ensures that the sub-carriers are orthogonal. Among the thus arranged sub-carriers, not all sub-carriers are modulated with data. Some sub-carriers are used for data transmission and others are not used for data transmission. For example, a sub-carrier $f_0$ corresponding to a DC component is not used for data transmission. And sub-carriers near the higher frequency end or the lower frequency end are not used for data transmission, in consideration of interference with other neighboring systems. Sub-carriers to be used or not to be used for data transmission are determined by standards such as IEEE.802.11a.

In the embodiment shown in Figure 2, all 64 sub-carriers can be used theoretically, but 12 sub-carriers in total

including $f_0$ corresponding to a DC component, higher frequencies $f_{27}$ to $f_{31}$, and lower frequencies $f_{-27}$ to $f_{-32}$ are not used for data transmission. Therefore 52 (64-12 = 52) sub-carriers are actually used for data transmission. It is known for transmitters and receivers which sub-carriers among 64 sub-carriers are unused for data transmission. In this way, signal components are extracted from the sub-carriers (virtual sub-carriers) unused for the actual data transmission, and are inputted to a gradient calculator 120. In the shown embodiment, a signal component of $f_0$ corresponding to a DC component is extracted for simplicity, but signal components of other virtual sub-carriers can be of extracted.

The gradient calculator 120 calculates each component of a gradient vector with respect to the extracted signal component. The adaptive array antenna controller 106 has an adjuster 122 that changes weighting coefficients of the antenna elements 110. The adjuster 122 comprises a first adjuster 124 for minimally changing bias voltages, and a second adjuster 126 for renewing the weighting coefficients based on perturbation calculations explained below. The gradient calculator 120 calculates a variation in the signal component of the virtual sub-carrier before and after the minimal change in the weighting coefficients. Based on the variation, each component of the gradient vector is calculated.

Digital signals outputted from the adjuster 122 are converted to analog signals by digital-to-analog converters 128, and then supplied to each reactance element 11. By appropriately adjusting each weighting coefficient of the antenna elements, the array antenna system 102 can direct its beam to a desired wave, or direct its null to an undesired wave. In this way, the directivity of the array antenna can be controlled.

As explained above, the virtual sub-carriers are not used for data transmission, and therefore the signal components of the virtual sub-carriers when demodulated should be zero ideally. However, if interference signals mingle with the received signals, the signal components of the virtual sub-carriers become non-zero. In the present embodiment, a signal component of a virtual sub-carrier is utilized as an evaluating function for perturbation calculations, and weighting coefficients are renewed successively so as to make the signal component of the virtual sub-carrier be near to zero.

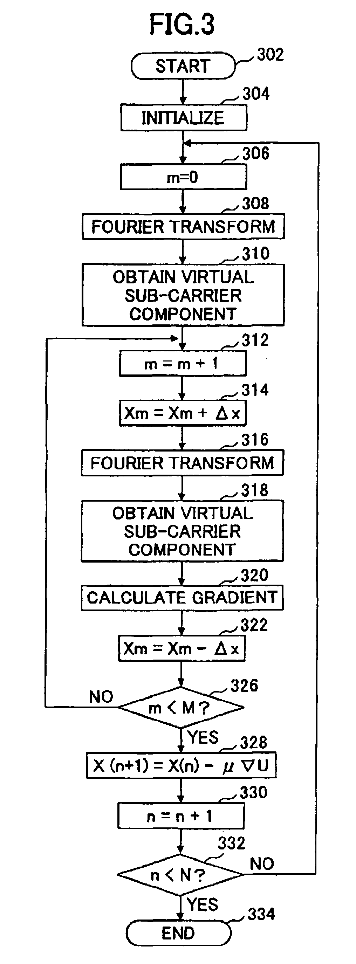

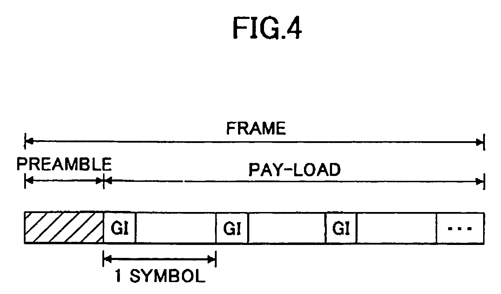

Fig. 3 shows a flow chart illustrating a controlling process performed in the adaptive array antenna system according to the embodiment of the present invention. This flow starts at a step 302. At steps 304, 306, the system is initialized. Specifically, a renewal step number n of the weighting coefficients is set to 1, and an identification number m for M antenna elements is set to zero. An appropriate bias voltage (or controlling signals for such bias voltages) $x^0 = (x_1^0, x_2^0, ..., x_M^0)$ is respectively given to each reactance element 111 so that a non-directional beam pattern is formed by the interaction between the powered antenna element 108 and M unpowered antenna elements 111. In other words, the weighting coefficient of each antenna element is adjusted so as to form a non-directional beam pattern. The adaptive array system may receive an OFDM signal, a frame of which includes a preamble and a following payload as shown in Fig. 4. The preamble contains a signal pattern known to both a transmitter and a receiver. The payload comprises a plurality of symbols, each having a guard interval and following effective symbols.

At step 308 in Fig. 3, a digital signal contained in one symbol in the payload is outputted from the analog-to-digital converter 104, passes through the serial-parallel converter 114 and is Fast Fourier transformed by the Fast Fourier transformer 116. In this way, signal components are obtained with respect to all the 64 sub-carriers.

At step 310, a signal component for a virtual sub-carrier is extracted. In the embodiment shown in Fig. 2, for example, a signal component $U_v^m(n)$ for the sub-carrier $f_0$ corresponding to a DC component is extracted. A parameter n means a renewal step number of the weighting coefficients, and equals to 1 (first step) at present. A value m is an identification number of the antenna elements, and equals to zero at present. The value of the signal component $U_v^m(n)$ is a reference value for perturbation calculations explained below. Not only the signal component for the sub-carrier $f_0$ corresponding to a DC component but also other signal components for higher frequencies $f_{27}$ to $f_{31}$ and lower frequencies $f_{-27}$ to $f_{-32}$ can be extracted. However, this embodiment extracts the signal component from the sub-carrier $f_0$ corresponding to a DC component for simplicity. The signal components extracted from sub-carriers are represented by amplitude levels or power levels.

At step 312, the antenna element identification number m is increased by one, and becomes one at present, which means the first antenna element among the M antenna elements to be controlled.

At step 314, a weighting coefficient (or a controlling signal for setting the weighting coefficient) $x_m$ of the mth antenna element is given a minimal variation $\Delta x$. At present, m = 1, and $x_1 = x_1 + \Delta x$. Accordingly the directivity of the array antenna is changed. The weighting coefficient $x_m$ is changed by the first adjuster 124 in the adjuster 122.

At step 316, the array antenna with the changed directivity receives a signal contained in the next symbol. The received signal is Fast Fourier transformed by the Fast Fourier transformer 116, and signal components for all the sub-carriers are outputted.

At step 318, a signal component $U_v^m(n)$ for the virtual sub-carrier is extracted when the first weighting coefficient is changed (m=1, n=1).

At step 320, based on a difference between the signal component $U_v^0(n)$ obtained at previous step 310 and the signal component $U_v^1(n)$ obtained at this time step 318, a first component of a gradient vector of the sub-carrier signal component $U_v$ is calculated. That is, based on the sub-carrier signal components before and after the minimal changes in the weighting coefficients, components of the gradient vector are calculated. Each component of the gradient vector $\nabla U_v$ is calculated by the gradient calculator 120. For example, the first component $(\nabla U_v)$ at the nth renewal step is represented as follows:

$$(\nabla U_v)_1 = \Delta U_v^1 / \Delta x = (U_v^1(n) - U_v^0(n)) / \Delta x.$$

Other components are represented similarly,

$$(\nabla U_v)_j = \Delta U_v^j / \Delta x = (U_v^j(n) - U_v^0(n)) / \Delta x.$$
$$(j = 1, 2, \ldots, M)$$

At step 322, the minimally changed weighting coefficient $x_m$ is changed back to the original value. Accordingly the directivity of the array antenna is returned back to the original one.

At step 326, it is determined whether the weighting coefficients are minimally changed and M components of the gradient vector are calculated for all the M antenna elements. At present, the answer is NO, and the process goes back to step 312. Then a weighting coefficient of the next antenna element is minimally changed, the sub-carrier signal component of the next symbol is measured, a component of the gradient vector is calculated, and then the minimally changed weighting coefficient is changed back to the original value. Similar procedures are repeated.

If the answer is YES at step 326, the process goes to step 328, and weighting coefficients for all the M reactance elements are calculated and renewed by the following equation:

$$x(n+1) = x(n) - \mu \nabla U_v$$

where n means the step number and equals to 1 at present, and a parameter $\mu$ means a renewal step size. The weighting coefficients are changed by the second adjuster 126.

At step 330, the renewal step number n is increased by one. At step 332, it is determined whether the weighting coefficients have been renewed a predetermined number of times N. If not, the process goes back to step 306. If so, the process ends.

The signal components $U_v$ are scalar variables depending on M weighting coefficients ($x_1$, $x_2$, ..., $x_M$). The gradient vector $\nabla U_v$ means the direction which gives the sharpest change in the signal components of the virtual sub-carrier on a curved surface represented by the sub-carrier signal components $U_v$ that are multiple variable scalar functions. Therefore, going along the gradient vector $\nabla U_v$ results in reaching the minimum value of the virtual sub-carrier signal component the fastest. When the weighting coefficients give the minimum value of the virtual sub-carrier signal component, a desired wave can be received well and an undesired wave (interference wave) can be suppressed.

In the process shown by the flow chart in Fig. 3, the Fourier transformation of received signals and extraction of the sub-carrier signal components are carried out on a symbol by symbol basis. Accordingly, at least one symbol length period is required, from the start (step 302) of the process to the minimal change in the first antenna element weighting coefficient (step 312, 314). And an M symbol length period is required until all the M antenna elements weighting coefficients are minimally changed to calculate all the M components of the gradient vector. Therefore, at least an M+1 symbol length period is needed for renewing the weighting coefficients one time.

As explained above, the virtual sub-carrier is not used for actual data transmission, therefore signal components in the preamble and payload of OFDM signal are zero ideally. According to the embodiment wherein the virtual sub-carrier signal component is extracted and a perturbation is performed at each symbol, the weighting coefficients can be renewed within merely an M+1 symbol length period. However, the array antenna should have good following-up characteristics responding the minimal change in the weighting coefficients.

According to another embodiment of the present invention, a known signal contained in the preamble can be utilized for calculating perturbations and renewing weighting coefficients. For example, if a sub-carrier signal component is extracted whenever the preamble is received, a long time of an M+1 frame is required for renewing the weighting coefficients one time. However, in this case, a gradient vector can be calculated based on the sub-carrier signal component for the same and already known signals contained in the preamble, and therefore high accuracy is obtained.

The sub-carrier signal component in the first embodiment is one for the sub-carrier $f_0$ corresponding to a DC component. It is possible to utilize other signal components for other sub-carriers (such as higher frequencies f27 to $f_{31}$, or lower frequencies f-27 to $f_{-32}$). For example, if an unused virtual sub-carrier near to a sub-carrier used for the actual data transmission is utilized, it is advantageous in finding a Doppler shift effect. If a received signal is shifted to higher frequency due to the Doppler shift, data transmitted with a sub-carrier $f_{26}$ in a transmitter are received as a signal component on a different sub-carrier $f_{27}$ in a receiver. In this case, the signal component on the unused sub-carrier $f_{27}$ becomes suddenly large. If the sub-carrier $f_{27}$ signal component is monitored in the receiver, the Doppler shift influence can be detected immediately. The same is true in the lower frequency side. Accordingly it is desirable to utilize a virtual sub-carrier adjacent to a sub-carrier actually used for calculating perturbations, especially from the viewpoint of the Doppler shift effect.

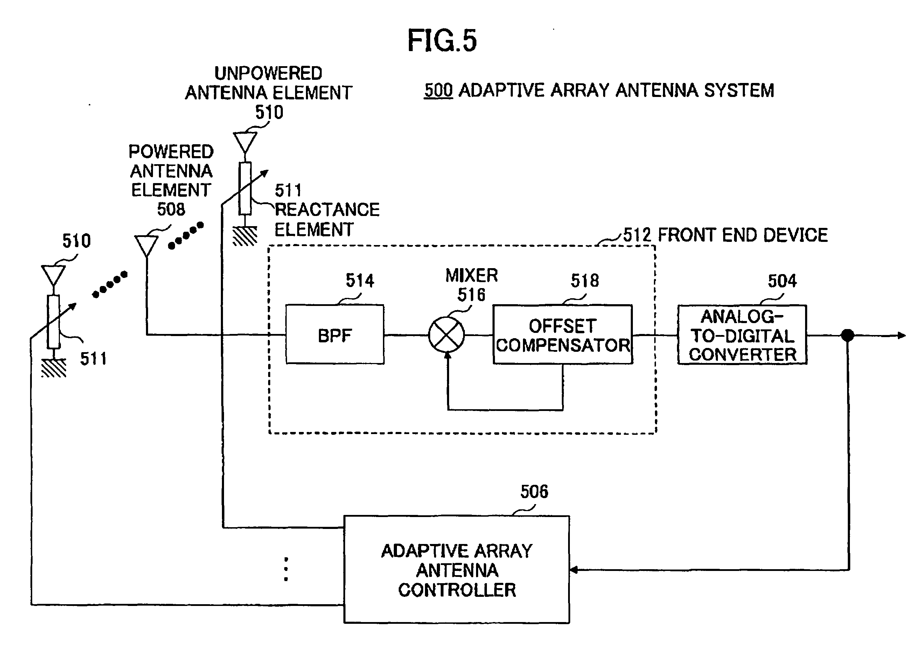

Fig. 5 shows a block diagram of an adaptive array antenna system 500 according to another embodiment of the present invention. In general the adaptive array antenna system 500 comprises one powered antenna element 508 and a plurality of unpowered antenna elements 510. Each of the unpowered antenna elements 510 is connected to the earth potential via reactance element 511. The powered antenna element 508 is connected to a band-pass limitation filter 514. An output of the band-pass limitation filter 514 is connected to a first input of a mixer 516. An output of the mixed 516 is connected through an offset compensator 518 to an analog-to-digital converter 504. The offset compensator 518 compensates carrier frequency offset between a transmitter and a receiver. A compensation signal outputted from the offset compensator 518 is connected to a second input of the mixer 516. The band-pass limitation filter 514, the mixer 516 and the offset compensator 518 forms a front end device 512.

An output of the analog-to-digital converter 504 is connected to an adaptive array antenna controller 506, which continuously controls a bias voltage to each reactance element 511. The adaptive array antenna controller 506 has the same structure as the adaptive array antenna controller 106 shown in Fig. 1. The powered antenna element 508 receives data transmission signals utilizing multiple carriers (sub-carriers) such as OFDM signals.

Local oscillators (not shown) used in a transmitter and a corresponding receiver should have the same oscillating frequency. However, due to device variation or age deterioration, their oscillating frequencies are sometimes offset. When such frequency offset becomes large, it becomes difficult to accurately suppress a virtual sub-carrier signal component. According to this embodiment, when converting a received signal, it is possible to adjust the frequency offset between the transmitter and the receiver to avoid frequency offset influence. Instead of adjusting the oscillating frequency, it is possible to carefully and adaptively select the sub-carrier in consideration of the frequency offset amount.

For example, in the case where a signal component for sub-carrier $f_{27}$ should be suppressed and a received signal is offset to a higher frequency, a signal component transmitted with a sub-carrier $f_{26}$ may be received at the sub-carrier $f_{27}$ in a receiver. In this case, the oscillating frequency adjusting method adjusts the local oscillation frequency so as to receive the signal component at f26 in the receiver. On the other hand, a sub-carrier selection method makes the system suppress a sub-carrier $f_{28}$ signal component. In any event, the frequency offset between the transmitter and receiver should be considered when suppressing the virtual sub-carrier signal component.

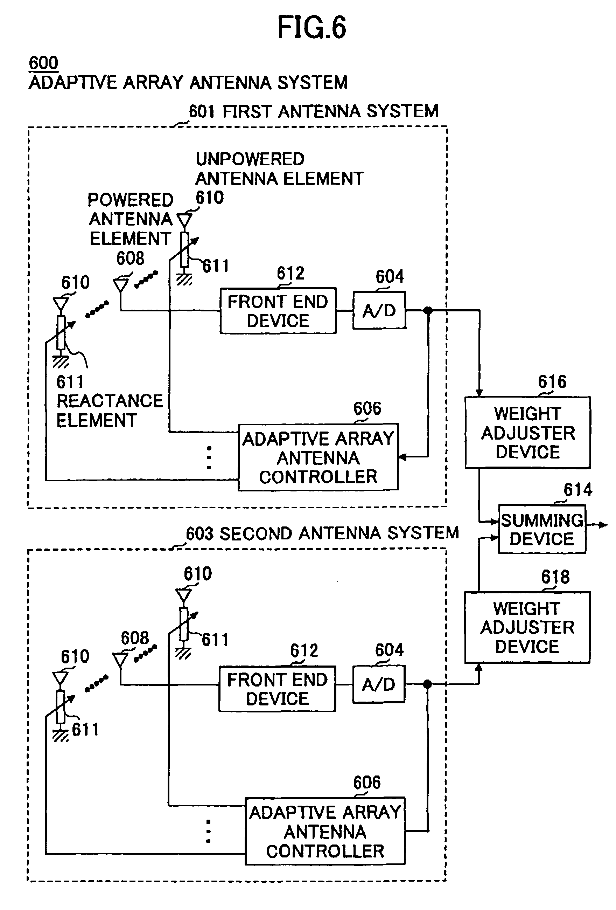

Fig. 6 shows a block diagram of an adaptive array antenna system 600 according to a further embodiment of the present invention. In general the adaptive array antenna system 600 comprises a first array antenna system 601, a second array antenna system 603 and a combining device 614 for combining outputs from both the first and second array antenna systems 601 and 603. The first and second array antenna systems 601 and 603 have the same structure and form diversity branches. Each of the first and second array antenna systems 601 and 603 has one powered antenna element 608 and a plurality of unpowered antenna elements 610. Each of the unpowered antenna elements 610 is connected to the earth potential via reactance element 611. The powered antenna element 608 is connected to a front end device 612 that performs band-pass limitation and frequency conversion and others. An output of the front end device 612 is connected to an analog-to-digital converter 604. An output of the analog-to-digital converter 604 is connected to an adaptive array antenna controller 606 that adaptively controls a weighting coefficient of each antenna element 610. The outputs from first and second analog-to-digital converters 604 are adjusted in phase and amplitude, respectively, by a weight adjuster 616 or 618, and then input to the combining device 614. In this way, the reception characteristics can be improved.

In each diversity branch in this embodiment, weighting coefficients are adjusted so as to minimize a virtual sub-carrier signal component to control the directivity of each antenna. The combination device 614 combines the signals from both branches. According to this embodiment, it is possible to consider a virtual sub-carrier signal component when diversity combining. For example, a branch in which a virtual sub-carrier signal component is small can be selected or combined with one of large weight, to recover transmitted signals based on fewer interference signals.

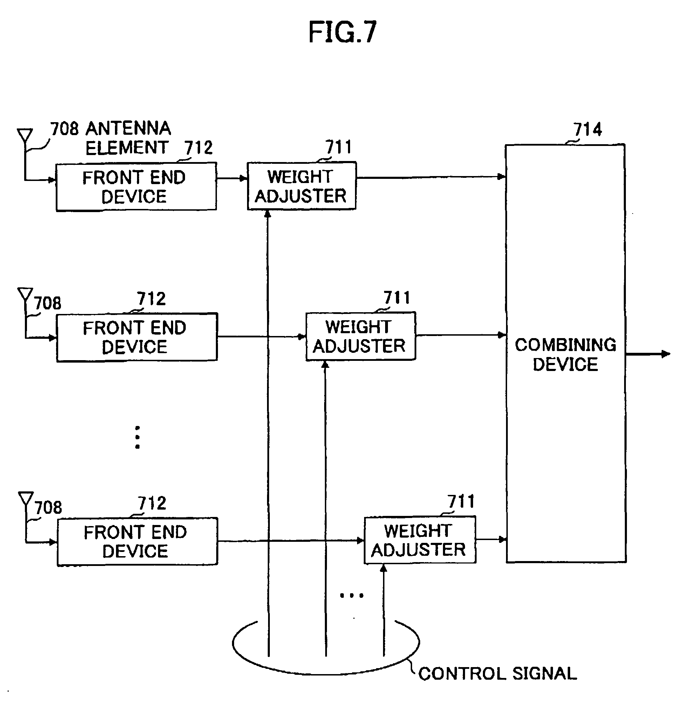

Fig. 7 shows another array antenna structure that can be utilized for the present invention. This structure forms an RF processing system (of a phased array system). As shown in Fig. 7, each of a plurality of antenna elements 708 is equipped with a front end device 612 performing a band-pass limitation and frequency conversion and others. An output of each front end device 712 is provided with a weight adjuster 711 for adjusting an amplitude and phase of a received signal. An output of each weight adjuster 711 is input to a combining device 714, from where a weighted and combined analog signal is outputted. This analog signal is inputted to a following analog-to-digital converter 104. The amplitude and phase adjustment in the weight adjuster 711 is performed based on control signals from the adaptive array antenna controller 106.

In the spatial processing type systems shown in Figs. 1, 5 and 6 and the RF processing type system shown in Fig. 7, the weighted and combined analog signal is converted by one analog-to-digital converter to form a signal supplied to a digital processing part (following the demodulation circuit and adaptive array antenna controller), and therefore advantages are gained from the viewpoints of power consumption, circuit size and cost. The RF processing type system shown in Fig. 7 can adjust amplitude and phase independently, and therefore the largest ratio combination is possible in the combination device 714, and it is advantageous in performing highly accurate control, compared with the Fig. 1 system. The spatial processing system shown in Fig. 1, controls reactance elements only and is advantageous in constructing a simple system, compared with the Fig. 7 system.

In the spatial processing type or RF processing type of array antenna controller according to the embodiments of the present invention, the signal component for each sub-carrier is extracted, a virtual sub-carrier signal component is measured, and weighting coefficients of antenna elements are adaptively controlled so as to suppress the virtual sub-carrier signal component. Therefore, it is possible to suppress an interference component contained in a received signal while reducing consumption of power. As an interference component to be suppressed in this embodiment, any virtual sub-carrier signal component can be utilized, and therefore it is possible to suppress any interference signal independent from interference causes. For example, it is possible to suppress not only a delayed signal coming over an internal guard, and an interference signal due to the Doppler Effect, but also other interference signals generated by other communication systems.

In the embodiment of the present invention, before starting the weighting coefficient adjusting process (step 312 and after), an array antenna 102 is adjusted to be non-directional, a received signal is Fourier transformed (step 308), and a virtual sub-carrier signal component is extracted (step 310). Therefore, it is possible to accurately detect the strength and direction of interference signals, and to effectively suppress interference components mingling with received signals by directing the antenna beam to a desired wave or directing the null to an undesired wave.

Further, it is also advantageous to regularly or when desired, make the array antenna non-directional and performs steps after the initialization step 302, because the communication environment of mobile communication systems is continuously changing as time goes. Accordingly it is desired to appropriately change virtual sub-carrier signal components together with the change in the communication environment.

For example, there is a tendency for weighting coefficients to be converged into one value to provide a stronger directional antenna pattern, as the renewal step number increases. However, in a case where weighting coefficient variation between before and after renewal is excessively large, there is a high probability that a desired wave direction or an undesired wave direction will be changed due to the change in communication environment. Accordingly, when the weighting coefficient variation is larger than a predetermined value, it is advantageous to assume communication environmental changes and to adjust the array antenna to be non-directional.

As the communication environment changes, the direction or time delay of a desired or undesired wave is changed, and the virtual sub-carrier signal components may also be changed. In this case, when the virtual sub-carrier signal component variation is larger than a predetermined value, it is advantageous to assume communication environmental changes and to adjust the array antenna to be non-directional.

Further, the present invention is not limited to these embodiments, but various variations and modifications may be made without departing from the scope of the present invention.

The present application is based on Japanese priority application No. 2002-380639 filed on December 27, 2002 with the Japanese Patent Office.

**Claims**

1. An adaptive array antenna controller that adaptively controls weighting coefficients (111, 511, 611) of a plurality of antenna elements (110, 510, 610) of an array antenna (102) based on a digital signal outputted from an analog-to-digital converter (104, 504, 604) receiving a weighted analog received signal from the array antenna (102), comprising:

   an extractor (116) for extracting a signal component for each of a plurality of sub-carriers (f31, ..., fo, ..., f-32) contained in the analog received signal by Fourier transforming the digital signal; and
   an adaptive controller (106, 506, 606) for adjusting the weighting coefficients (111, 511, 611) based on a gradient vector so as to suppress a predetermined sub-carrier (fo) among the plurality of sub-carriers, and for calculating the gradient vector based on the signal components of the predetermined sub-carrier.

2. The adaptive array antenna controller as claimed in claim 1, wherein the adaptive array antenna controller receives a combined weighted analog received signal from the array antenna combining the received signals from said antenna elements (108, 110; 508, 510; 608, 610).

3. The adaptive array antenna controllers claimed in claim 1, wherein the adaptive array antenna controller receives the weighted analog received signal from the array antenna comprising a plurality of unpowered antenna elements (110, 510, 610) and one powered antenna element (108, 508, 608).

4. The adaptive array antenna controller as claimed in claim 1, wherein the adaptive controller adjusts the weighting coefficients (111, 511, 611) so as to suppress the signal component (fo) for one of the sub-carriers corresponding to a DC component.

5. The adaptive array antenna controller as claimed in claim 1, wherein the adaptive controller adjusts the weighting coefficients (111, 511, 611) so as to suppress the signal component for an unused sub-carrier adjacent to one of the sub-carriers used for transmitting data at a transmitter.

6. The adaptive array antenna controller as claimed in claim 1, wherein the adaptive controller adjusts the weighting coefficients (111, 511, 611) so as to suppress the signal component for an unused sub-carrier adjacent to one of the sub-carriers having the maximum frequency used for transmitting data at a transmitter.

7. The adaptive array antenna controller as claimed in claim 1, wherein the adaptive controller adjusts the weighting coefficients (111, 511, 611) so as to suppress the signal component for an unused sub-carrier adjacent to one of the sub-carriers having the minimum frequency used for transmitting data at a transmitter.

8. The adaptive array antenna controller as claimed in claim 1, wherein the adaptive controller selects one of the sub-carriers (f31, ..., fo, ..., f-32) to be suppressed in consideration of frequency offset between a transmitter and a receiver.

9. The adaptive array antenna controller as claimed in claim 1, wherein the digital signal comprises a preamble part and payload parts following the preamble part, each of the payload parts includes a plurality of symbols, and the adaptive controller renews the weighting coefficients for each of the symbols corresponding to the antenna elements (108, 110; 508, 510; 608, 610).

10. The adaptive array antenna controller as claimed in claim 1, wherein the adaptive controller comprises:

an adjuster (122) for adjusting the weighting coefficients of the antenna elements; and
a gradient (120) calculator for calculating each component of the gradient vector, based on the signal components of the predetermined sub-carrier before and after modifying the weighting coefficients (111);
whereby the weighting coefficients(111) are renewed based on the gradient vector.

11. The adaptive array antenna controller as claimed in claim 1, wherein the adaptive controller is initialized based on the digital signal obtained from the analog-to-digital converter (104, 504, 604) when the array antenna (102) forms a non-directional antenna pattern.

12. The adaptive array antenna controller as claimed in claim 11, wherein the weighting Coefficients (111, 511, 611) are adjusted when a variation in an interference component to be suppressed becomes greater than a predetermined value, so that the array antenna (102) forms a non-directional antenna pattern.

13. The adaptive array antenna controller as claimed in claim 11, wherein the weighting coefficients (111, 511, 611) are adjusted when a variation in the weighting coefficients renewed successively becomes greater than a predetermined value, so that the array antenna (102) forms a non-directional antenna pattern.

14. An adaptive array antenna system comprising at least a first antenna system (601) and a second antenna system (603) forming a plurality of diversity branches, and a combining device (614) for combining outputs from the first and second antenna systems (601, 603), wherein,
each of said first and second antenna systems comprises,
an array antenna having a plurality of antenna elements (608, 610);
an analog-to-digital converter (604) coupled to the array antenna and receiving a weighted and combined analog received signal; and
an adaptive array antenna controller (606) coupled to the analog-to-digital converter (604) and adaptively controlling weighting coefficients of said antenna elements (610); and
the adaptive array antenna Controller (606) comprises,
an extractor (116) for extracting a signal component for each of a plurality of sub-carriers (f31, ..., fo, ..., f-32) contained in the analog received signal by Fourier transforming a digital signal outputted from the analog-to-digital converter (104); and

an adaptive controller (606) for adjusting the weighting coefficients so as to suppress a predetermined sub-carrier among the sub-carriers.

**Patentansprüche**

1. Adaptives Feldantennen-Steuergerät, das adaptiv Gewichtungskoeffizienten (111, 511, 611) einer Vielzahl von Antennenelementen (110, 510, 610) einer Feldantenne (102) basierend auf einem digitalen Signal steuert, das von einem analog-zu-digital-Umwandler (104, 504, 604) ausgegeben wird, der ein gewichtetes, analog empfangenes Signal von der Feldantenne (102) empfängt, mit:

    einem Extrahierer (116) zum Extrahieren einer Signalkomponente für jeden aus einer Vielzahl von Sub-Trägern (f31,..., fo, ..., f-32), die in dem analog empfangenen Signal enthalten sind, durch Fourier-Transformieren des digitalen Signals; und

    einem adaptiven Steuergerät (106, 506, 606) zum Einstellen der Gewichtungskoeffizienten (111, 511, 611) basierend auf einem Gradientenvektor, um so einen vorbestimmten Sub-Träger (fo) aus der Vielzahl von Sub-Trägern zu unterdrücken und zum Berechnen des Gradientenvektors basierend auf den Signalkomponenten des vorbestimmten Sub-Trägers.

2. Adaptives Feldantennen-Steuergerät nach Anspruch 1, wobei das adaptive Feldantennen-Steuergerät ein kombiniertes, gewichtetes, analog empfangenes Signal von der Feldantenne empfängt, die die empfangenen Signale von den Antennenelementen (108, 110; 508, 510; 608, 610) kombiniert.

3. Adaptive Feldantennen-Steuergeräte nach Anspruch 1, wobei das adaptive Feldantennen-Steuergerät das gewichtete, analog empfangene Signal von der Feldantenne empfängt, die eine Vielzahl von nicht mit Leistung versorgten Antennenelementen (110, 510, 610) und ein leistungsversorgtes Antennenelement (108, 508, 608) umfasst.

4. Adaptives Feldantennen-Steuergerät nach Anspruch 1, wobei das adaptive Steuergerät die Gewichtungskoeffizienten (111, 511, 611) einstellt, um die Signalkomponente (fo) für einen der Sub-Träger entsprechend einer Gleichstromkomponente zu unterdrücken.

5. Adaptives Feldantennen-Steuergerät nach Anspruch 1, wobei das adaptive Steuergerät die Gewichtungskoeffizienten (111, 511, 611) an einem Sender einstellt, um so die Signalkomponente für einen unbenutzten Sub-Träger zu unterdrücken, der benachbart zu einem der Sub-Träger liegt, die zum Übertragen von Daten verwendet werden.

6. Adaptives Feldantennen-Steuergerät nach Anspruch 1, wobei das adaptive Steuergerät die Gewichtungskoeffizienten (111, 511, 611) an einem Sender einstellt, um die Signalkomponente für einen unbenutzten Sub-Träger zu unterdrücken, der benachbart zu einem der Sub-Träger liegt, die die Maximalfrequenz aufweisen, die zum Übertragen von Daten verwendet wird.

7. Adaptives Feldantennen-Steuergerät nach Anspruch 1, wobei das adaptive Steuergerät die Gewichtungskoeffizienten (111, 511, 611) an einem Sender einstellt, um so die Signalkomponente für einen unbenutzten-Sub-Träger zu unterdrücken, der benachbart zu einem der Sub-Träger ist, der die Minimalfrequenz aufweist, die zum Übertragen von Daten verwendet wird.

8. Adaptives Feldantennen-Steuergerät nach Anspruch 1, wobei das adaptive Steuergerät einen der Sub-Träger (f31,..., fo,..., f-32) auswählt, der unter Berücksichtigung eines Frequenzversatzes zwischen einem Sender und einem Empfänger unterdrückt werden soll.

9. Adaptives Feldantennen-Steuergerät nach Anspruch 1, wobei das digitale Signal einen Präambel-Teil und Nutzlastteile umfasst, die dem Präambel-Teil folgen, wobei jeder der Nutzlastteile eine Vielzahl von Symbolen einschließt und das adaptive Steuergerät die Gewichtungskoeffizienten für jedes der Symbole entsprechend den Antennenelementen (108, 110; 508 510; 608, 610) erneuert.

10. Adaptives Feldantennen-Steuergerät nach Anspruch 1, wobei das adaptive Steuergerät umfasst:

einen Einsteller (122) zum Einstellen der Gewichtungskoeffizienten der Antennenelemente; und

einen Gradientenberechner (120) zum Berechnen jeder Komponente des Gradientenvektors, basierend auf den Signalkomponenten des vorbestimmten Sub-Trägers vor und nach einem Modifizieren der Gewichtungskoeffizienten (111),

wodurch die Gewichtungskoeffizienten (111) basierend auf dem Gradientenvektor erneuert werden.

11. Adaptives Feldantennen-Steuergerät nach Anspruch 1, wobei das adaptive Steuergerät basierend auf dem digitalen Signal initialisiert wird, das von dem analog-zu-digital-Umwandler 8104, 504, 604) erhalten wird, wenn die Feldantenne (102) ein ungerichtetes Antennenmuster bildet.

12. Adaptives Feldantennen-Steuergerät nach Anspruch 11, wobei die Gewichtungskoeffizienten (111, 511, 611) eingestellt werden, wenn eine Variation in einer Interferenzkomponente, die unterdrückt werden soll, größer als ein vorbestimmter Wert wird, so dass die Feldantenne (102) ein ungerichtetes Antennenmuster bildet.

13. Adaptives Feldantennen-Steuergerät nach Anspruch 11, wobei die Gewichtungskoeffizienten (111, 511, 611) eingestellt werden, wenn eine Variation in dem Gewichtungskoeffizienten, die aufeinander folgend erneuert werden, größer als ein vorbestimmter Wert wird, so dass die Feldantenne (102) ein ungerichtetes Antennenmuster bildet.

14. Adaptives Feldantennen-System mit zumindest einem ersten Antennensystem (601) und einem zweiten Antennensystem (603), das eine Vielzahl von Diversitätszweigen bildet und einem kombinierenden Gerät (614) zum Kombinieren von Ausgaben von den ersten und zweiten Antennensystemen (601, 603), wobei, jedes der ersten und zweiten Antennensysteme umfasst:

eine Feldantenne mit einer Vielzahl von Antennenelementen (608, 610);

einen analog-zu-digital-Umwandler (604), der mit der Feldantenne gekoppelt ist und der ein gewichtetes und kombiniertes analog empfangenes Signal empfängt; und

ein adaptives Feldantennen-Steuergerät (606), das mit dem analog-zu-digital-Umwandler (604) gekoppelt ist und das adaptiv die Gewichtungskoeffizienten der Antennenelemente (610) steuert; und

das adaptive Feldantennen-Steuergerät (606) umfasst:

einen Extrahierer (116) zum Extrahieren einer Signalkomponente für jeden einer Vielzahl von Sub-Trägern (f31, ..., fo, ..., f-32), die in dem analog empfangenen Signal enthalten sind, durch Fourier-Transformieren eines digitalen Signals, das von dem analog-zu-digital-Umwandler (104) ausgegeben wird; und

einem adaptiven Steuergerät (606) zum Einstellen der Gewichtungskoeffizienten, um so einen vorbestimmten Sub-Träger aus den Sub-Trägern zu unterdrücken.

## Revendications

1. Dispositif de commande adaptive d'un réseau d'antennes qui contrôle de manière adaptive des coefficients de pondération (111, 511, 611) d'une pluralité d'éléments d'antenne (110, 510, 610) d'une antenne réseau (102) sur la base d'un signal numérique transmis par un convertisseur analogique/numérique (104, 504, 604) recevant un signal analogique reçu et pondéré de la part de l'antenne réseau (102), comprenant :

un extracteur (116) destiné à extraire une composante de signal pour chacune d'une pluralité de sous-porteuses (f31, ..., fo, ..., f-32) contenues dans le signal analogique reçu en effectuant une transformée de Fourier du signal numérique ; et

un dispositif de commande adaptive (106, 506, 606) destiné à ajuster les coefficients de pondération (111, 511, 611) sur la base d'un vecteur de gradient de façon à supprimer une sous-porteuse prédéterminée (fo) d'une pluralité de sous-porteuses, et à calculer le vecteur de gradient sur la base des composantes de signal de la sous-porteuse prédéterminée.

2. Dispositif de commande adaptive d'un réseau d'antennes selon la revendication 1, dans lequel le dispositif de commande adaptive d'un réseau d'antennes reçoit un signal analogique combiné reçu et pondéré de la part de l'antenne réseau combinant les signaux reçus provenant desdits éléments d'antenne (108, 110 ; 508, 510 ; 608, 610).

3. Dispositif de commande adaptive d'un réseau d'antennes selon la revendication 1, dans lequel le dispositif de commande adaptive d'un réseau d'antennes reçoit le signal analogique reçu et pondéré de la part de l'antenne réseau comprenant une pluralité d'éléments d'antenne non alimentés (110, 510, 610) et un élément d'antenne alimenté (108, 508, 608).

4. Dispositif de commande adaptive d'un réseau d'antennes selon la revendication 1, dans lequel le dispositif de commande adaptive ajuste les coefficients de pondération (111, 511, 611) de façon à supprimer la composante de signal (fo) pour l'une des sous-porteuses correspondant à une composante CC.

5. Dispositif de commande adaptive d'un réseau d'antennes selon la revendication 1, dans lequel le dispositif de commande adaptive ajuste les coefficients de pondération (111, 511, 611) de façon à supprimer la composante de signal pour une sous-porteuse inutilisée adjacente à l'une des sous-porteuses utilisées pour transmettre des données au niveau d'un émetteur.

6. Dispositif de commande adaptive d'un réseau d'antennes selon la revendication 1, dans lequel le dispositif de commande adaptive ajuste les coefficients de pondération (111, 511, 611) de façon à supprimer la composante de signal pour une sous-porteuse inutilisée adjacente à l'une des sous-porteuses ayant la fréquence maximum utilisée pour transmettre des données au niveau d'un émetteur.

7. Dispositif de commande adaptive d'un réseau d'antennes selon la revendication 1, dans lequel le dispositif de commande adaptive ajuste les coefficients de pondération (111, 511, 611) de façon à supprimer la composante de signal pour une sous-porteuse inutilisée adjacente à l'une des sous-porteuses ayant la fréquence minimum utilisée pour transmettre des données au niveau d'un émetteur.

8. Dispositif de commande adaptive d'un réseau d'antennes selon la revendication 1, dans lequel le dispositif de commande adaptive sélectionne l'une des sous-porteuses (f31, ..., fo, ..., f-32) devant être supprimée en considérant un décalage de fréquence entre un émetteur et un récepteur.

9. Dispositif de commande adaptive d'un réseau d'antennes selon la revendication 1, dans lequel le signal numérique comprend une partie de préambule et des parties de charge utile suivant la partie de préambule, chacune des comprend une pluralité de symboles, et le dispositif de commande adaptive renouvelle les coefficients de pondération pour chacun des symboles correspondant aux éléments d'antenne (108, 110 ; 508, 510 ; 608, 610).

10. Dispositif de commande adaptive d'un réseau d'antennes selon la revendication 1, dans lequel le dispositif de commande adaptive comprend :

   un ajusteur (122) destiné à ajuster les coefficients de pondération des éléments d'antenne ; et
   un calculateur de gradients (120) destiné à calculer chaque composante du vecteur de gradient, sur la base des composantes de signal de la sous-porteuse prédéterminée avant et après la modification des coefficients de pondération (111) ;
   moyennant quoi les coefficients de pondération (111) sont renouvelés sur la base du vecteur de gradient.

11. Dispositif de commande adaptive d'un réseau d'antennes selon la revendication 1, dans lequel le dispositif de commande adaptive est initialisé sur la base du signal numérique obtenu de la part du convertisseur analogique/numérique (104, 504, 604) lorsque l'antenne réseau (102) forme un diagramme de rayonnement d'antenne non directionnelle.

12. Dispositif de commande adaptive d'un réseau d'antennes selon la revendication 11, dans lequel les coefficients de pondération (111, 511, 611) sont ajustés lorsqu'une variation d'une composante d'interférence devant être supprimée devient supérieure à une valeur prédéterminée, afin que l'antenne réseau (102) forme un diagramme de rayonnement d'antenne non directionnelle.

13. Dispositif de commande adaptive d'un réseau d'antennes selon la revendication 11, dans lequel les coefficients de pondération (111, 511, 611) sont ajustés lorsqu'une variation des coefficients de pondération renouvelés successivement devient supérieure à une valeur prédéterminée, afin que l'antenne réseau (102) forme un diagramme de rayonnement d'antenne non directionnelle.

14. Dispositif de commande adaptive d'un réseau d'antennes comprenant au moins un premier système d'antenne (601) et un second système d'antenne (603) formant une pluralité de branches en diversité, et un dispositif de combinaison (614) destiné à combiner les sorties du premier et du second systèmes d'antenne (601, 603), dans lequel chacun dudit premier et dudit second systèmes d'antenne comprend

une antenne réseau ayant une pluralité d'éléments d'antenne (608, 610) ;

un convertisseur analogique/numérique (604) couplé à l'antenne réseau et recevant un signal analogique reçu pondéré et combiné ; et

un dispositif de commande adaptive d'un réseau d'antennes (606) couplé au convertisseur analogique/numérique (604) et contrôlant de manière adaptive les coefficients de pondération desdits éléments d'antenne (610) ; et

le dispositif de commande adaptive d'un réseau d'antennes (606) comprend

un extracteur (116) destiné à extraire une composante de signal pour chacune d'une pluralité de sous-porteuses (f31, ..., fo, ..., f-32) contenues dans le signal analogique reçu en effectuant une transformée de Fourier d'un signal numérique transmis par le convertisseur analogique/numérique (104) ; et

un dispositif de commande adaptive (606) destiné à ajuster les coefficients de pondération de façon à supprimer une sous-porteuse prédéterminée parmi les sous-porteuses.

# FIG.1

100 ADAPTIVE ARRAY ANTENNA SYSTEM

EP 1 434 367 B1

# FIG.2

# FIG.3

START — 302

INITIALIZE — 304

m=0 — 306

FOURIER TRANSFORM — 308

OBTAIN VIRTUAL SUB-CARRIER COMPONENT — 310

m = m + 1 — 312

$Xm = Xm + \Delta x$ — 314

FOURIER TRANSFORM — 316

OBTAIN VIRTUAL SUB-CARRIER COMPONENT — 318

CALCULATE GRADIENT — 320

$Xm = Xm - \Delta x$ — 322

$m < M$? — 326 — NO — YES

$X(n+1) = X(n) - \mu \nabla U$ — 328

$n = n + 1$ — 330

$n < N$? — 332 — NO — YES

END — 334

15

# FIG.4

FRAME

PREAMBLE          PAY-LOAD

| //// | GI |  | GI |  | GI |  | ... |

1 SYMBOL

# FIG.5

500 ADAPTIVE ARRAY ANTENNA SYSTEM

UNPOWERED ANTENNA ELEMENT 510

POWERED ANTENNA ELEMENT 508

510

511 REACTANCE ELEMENT

512 FRONT END DEVICE

514 — BPF

MIXER 516

518 — OFFSET COMPENSATOR

504 — ANALOG-TO-DIGITAL CONVERTER

506 — ADAPTIVE ARRAY ANTENNA CONTROLLER

# FIG.6

<u>600</u>
ADAPTIVE ARRAY ANTENNA SYSTEM

# FIG.7

## REFERENCES CITED IN THE DESCRIPTION

**Patent documents cited in the description**

- US 6327314 B1

- JP 2002380639 A

**Non-patent literature cited in the description**

- **NISHIKAWA ; YOSHITAHA HARA ; SHINSUKE HARA.** OFDM Adaptive Array for suppressing Doppler Shift. *The Institute of Electronics, Information and Communication Engineering,* October 2000

- **J. S. CHOW ; J. M. CIOFFI ; J. A. C. BINGHAM.** Equalizer Training Algorithms for Multicarrier modulation Systems. *International Conference on Communications,* 1993, 761-765
- Asymmetric Digital Subscriber Line. *ITU-T Recommendation G. 992.1,* 1999